# EUROPEAN PATENT APPLICATION

(11) **EP 4 207 714 A1**
(43) Date of publication of application: **05.07.2023**
(21) Application number: 22195410.0
(22) Date of filing: 13.09.2022
(51) Int. Cl.: H04L 67/53, H04L 67/52

(54) **PAGE DISPLAY METHOD AND ELECTRONIC DEVICE**

(30) Priority: 31.12.2021 CN 202111679521
(71) Applicant: Apollo Intelligent Connectivity (Beijing) Technology Co., Ltd., Beijing 102600 (CN)
(72) Inventor: HUANG, Qili, Beijing, 102600 (CN); OUYANG, Nengjun, Beijing, 102600 (CN)
(74) Representative: Stöckeler, Ferdinand

(57) **Abstract**

Provided are a page display method and an electronic device. The present invention relates to the technical field of computers, and in particular, to the automatic driving technology, the Internet of Vehicles technology, and the field of smart cabins. The specific implementation solution is: a remote server corresponding to an in-vehicle device is determined, wherein the content displayed on a page by the remote server is authorized by default to be displayed on the in-vehicle device; first page data of a remote server is acquired, wherein the first page data corresponds to a first page displayed on the remote server; and the first page is displayed on the in-vehicle device according to the first page data.

## Description

### CROSS REFERENCE TO RELATED APPLICATIONS

The present disclosure claims priority of Chinese Patent Application No. 202111679521.0, filed on December, 31, 2021 and named after " Page Display Method and Apparatus, and Electronic Device ". Contents of the present disclosure are hereby incorporated by reference in its entirety of the Chinese Patent Application.

### Technical Field

The present disclosure relates to the technical field of computers, and in particular, to the automatic driving technology, the vehicle networking technology, and the field of smart cabinets, and in particular, to a page display method and an electronic device.

### Background

With the progress and development of the era, more and more users are not satisfied with several core functions of the intelligent vehicle system, such as map, music and voice, and wish to integrate more functions of three-party applications and use them for free. Therefore, there is an urgent need to develop solutions for screen projection of three-party applications, so that the ecosystem of mobile phone can be directly mapped to an in-vehicle device, thereby enriching the use scenarios of a user.

In order to solve the problem, in the related art, there are various restrictions and bottlenecks on the Android/IOS system for screen projection of three-party applications, and the experience is not very good.

### Summary

Provided are a page display method and an electronic device.

According to one aspect of the present disclosure, provided are a page display method, including: determining a remote server corresponding to an in-vehicle device, wherein content displayed on a page of the remote server is authorized by default to be displayed on the in-vehicle device; acquiring first page data of the remote server, wherein the first page data corresponds to a first page displayed on the remote server; and displaying the first page on the in-vehicle device according to the first page data.

As at least one alternative embodiment, after displaying the first page on the in-vehicle device according to the first page data, further including: receiving an application opening instruction, wherein the application opening instruction is configured to open a predetermined application on the first page; sending the application opening instruction to the remote server; receiving second page data sent by the remote server, wherein the second page data corresponds to a second page, and the second page is a page obtained after the predetermined application is opened on the first page according to the application opening instruction; and displaying the second page on the in-vehicle device according to the second page data.

As at least one alternative embodiment, a display effect of the second page is determined according to a resolution of the in-vehicle device.

As at least one alternative embodiment, after displaying the second page on the in-vehicle device according to the second page data, further including: receiving an operation instruction for performing an operation on the predetermined application, and a first coordinate, on the second page displayed on the in-vehicle device, of the operation; sending the operation instruction and the first coordinate to the remote server; receiving third page data sent by the remote server, wherein the third page data corresponds to a third page, the third page is a page obtained after the operation is executed on the predetermined application on a second coordinate of the second page according to the operation instruction, and the second coordinate is obtained by converting the first coordinate by using a predetermined coordinate conversion relationship between the in-vehicle device and the remote server; and displaying the third page on the in-vehicle device according to the third page data.

As at least one alternative embodiment, after displaying the second page on the in-vehicle device according to the second page data, further including: when the opened predetermined application includes multimedia content, receiving multimedia data sent by the remote server and corresponding to the multimedia content; and playing the multimedia data by means of a playing device on the in-vehicle device.

As at least one alternative embodiment, after displaying the second page on the in-vehicle device according to the second page data, further including: receiving a control instruction for controlling the predetermined application, wherein the control instruction includes at least one of following: a voice instruction, a gesture instruction and an image instruction; sending the control instruction to the remote server; receiving fourth page data sent by the remote server, wherein the fourth page data corresponds to a fourth page, and the fourth page is a page obtained after the predetermined application is controlled on the second page according to the control instruction; and displaying the fourth page on the in-vehicle device according to the fourth page data.

As at least one alternative embodiment, the in-vehicle device communicates with the remote server by means of a mobile terminal, the mobile terminal uses a webpage component to load a page displayed on the remote server, and the mobile terminal acquires page data of the remote server by means of a manner in which the webpage component loads a page displayed on the remote server, and sends to the in-vehicle device the page data acquired from the remote server.

According to another aspect of the present disclosure, provided is a page display method, including: acquiring first page data of a remote server, wherein the first page data corresponds to a first page displayed on the remote server, and content displayed on the page of the remote server is authorized by default to be displayed on an in-vehicle device; and sending the first page data to the in-vehicle device, so as to display the first page on the in-vehicle device.

As at least one alternative embodiment, after sending the first page data to the in-vehicle device so as to display the first page on the in-vehicle device, further including: receiving an application opening instruction sent by the in-vehicle device, wherein the application opening instruction is configured to open a predetermined application on the first page; opening the predetermined application on the first page according to the application opening instruction, so as to obtain a second page; acquiring second page data corresponding to the second page; and sending the second page data to the in-vehicle device, so as to display the second page on the in-vehicle device.

As at least one alternative embodiment, acquiring second page data corresponding to the second page includes: acquiring a resolution of the in-vehicle device; determining a display effect of the second page according to the resolution of the in-vehicle device; and acquiring second page data corresponding to the display effect.

As at least one alternative embodiment, after sending the second page data to the in-vehicle device so as to display the second page on the in-vehicle device, further including: receiving an operation instruction and a first coordinate which are sent by the in-vehicle device, wherein the operation instruction is configured to perform an operation on the predetermined application, and the first coordinate is a coordinate, on the second page displayed on the in-vehicle device, of the operation; converting the first coordinate by using a predetermined coordinate conversion relationship between the in-vehicle device and the remote server, so as to obtain a second coordinate, on a second page displayed on the remote server, of the operation; executing, on the second coordinate of the second page, the operation on the predetermined application according to the operation instruction, so as to obtain a third page; acquiring third page data corresponding to the third page; and sending the third page data to the in-vehicle device, so as to display the third page on the in-vehicle device.

As at least one alternative embodiment, after sending the second page data to the in-vehicle device so as to display the second page on the in-vehicle device, further including: when the opened predetermined application includes multimedia content, sending to the in-vehicle device multimedia data corresponding to the multimedia content, so as to play the multimedia data by means of a playing device on the in-vehicle device.

As at least one alternative embodiment, after sending the second page data to the in-vehicle device so as to display the second page on the in-vehicle device, further including: receiving a control instruction sent by the in-vehicle device for controlling the predetermined application, wherein the control instruction includes at least one of following: a voice instruction, a gesture instruction and an image instruction; controlling, on a second page displayed on the remote server, the predetermined application according to the control instruction, so as to obtain a fourth page; acquiring fourth page data corresponding to the fourth page; and sending the fourth page data to the in-vehicle device, so as to display the fourth page on the in-vehicle device.

As at least one alternative embodiment, the in-vehicle device communicates with the remote server by means of a mobile terminal, the mobile terminal acquires page data of the remote server by means of a manner in which a webpage component loads a page displayed on the remote server, and sends to the in-vehicle device the page data acquired from the remote server.

According to one aspect of the present disclosure, provided are a page display apparatus, including: a first determination module, configured to determine a remote server corresponding to an in-vehicle device, wherein content displayed on a page of the remote server is authorized by default to be displayed on the in-vehicle device; a first acquisition module, configured to acquire first page data of the remote server, wherein the first page data corresponds to a first page displayed on the remote server; and a first display module, configured to display the first page on the in-vehicle device according to the first page data.

According to another aspect of the present disclosure, provided are a page display apparatus, including: a second acquisition module, configured to acquire first page data of a remote server, wherein the first page data corresponds to a first page displayed on the remote server, and the content displayed on the page of the remote server is authorized by default to be displayed on an in-vehicle device; and a fifth sending module, configured to send the first page data to the in-vehicle device, so as to display the first page on the in-vehicle device.

According to an aspect of the present disclosure, provided is an electronic device, including: at least one processor; and a memory communicatively connected to the at least one processor, wherein the memory stores an instruction executable by the at least one processor, and the instruction is executed by the at least one processor, so that the at least one processor is able to execute at least one of the above methods.

According to another aspect of the present disclosure, provided is a non-transitory computer readable storage medium storing computer instructions, wherein the computer instructions are used to cause a computer to execute at least one of the above methods.

According to yet another aspect of the present disclosure, provided is a computer program product including a computer program which, when executed by a processor, implements the at least one of the above methods.

According to another aspect of the present disclosure, provided is an automatic driving system, including: a controller, a memory, a sensor, a display screen and a data transmission interface, wherein the controller is in communication with the memory, the sensor, the display screen and the data transmission interface, and controls the automatic driving system to execute the page display method.

According to still another aspect of the present disclosure, provided is a smart cockpit, including a controller, a memory, a sensor, a display screen and a data transmission interface, wherein the controller is in communication with the memory, the sensor, the display screen and the data transmission interface, and is used for controlling the smart cockpit to execute the page display method.

According to still another aspect of the present disclosure, provided is an Internet of Vehicles system, including: a vehicle, a mobile terminal and a remote server, wherein the vehicle includes an in-vehicle device, the in-vehicle device communicates with the remote server by means of the mobile terminal, the in-vehicle device is used for executing the page display method, and the remote server is used for executing the page display method.

It should be appreciated that the content as described in this part is neither intended to identify key or critical features of embodiments of the present disclosure, nor to limit the scope of the present disclosure. Other features of the present disclosure will become readily understood from the following description.

### Brief Description of the Drawings

Fig. 1 is a flowchart of a page display method I according to an embodiment of the present disclosure;
Fig. 2 is a flowchart of a page display method II according to an embodiment of the present disclosure;
Fig. 3 is a schematic diagram of in-vehicle interaction provided according to an alternative embodiment of the disclosure;
Fig. 4 is a structure diagram of a page display apparatus I according to an embodiment of the present disclosure;
Fig. 5 is a structure diagram of a page display apparatus II according to an embodiment of the present disclosure;
Fig. 6 illustrates a schematic block diagram of an exemplary electronic device 600 which can be used to implement the embodiments of the present disclosure.

### Detailed Description of the Embodiments

Hereinafter, exemplary embodiments of the present disclosure are illustrated with reference to the accompanying drawings, in which various details of the embodiments of the present disclosure are included to facilitate understanding, and they shall be considered as merely exemplary. Accordingly, a person of ordinary skill in the art would recognize that various changes and modifications of the embodiments described herein can be made without departing from the scope and spirit of the present disclosure. Also, for clarity and conciseness, illustrations of well-known functions and structures are omitted in the following description.

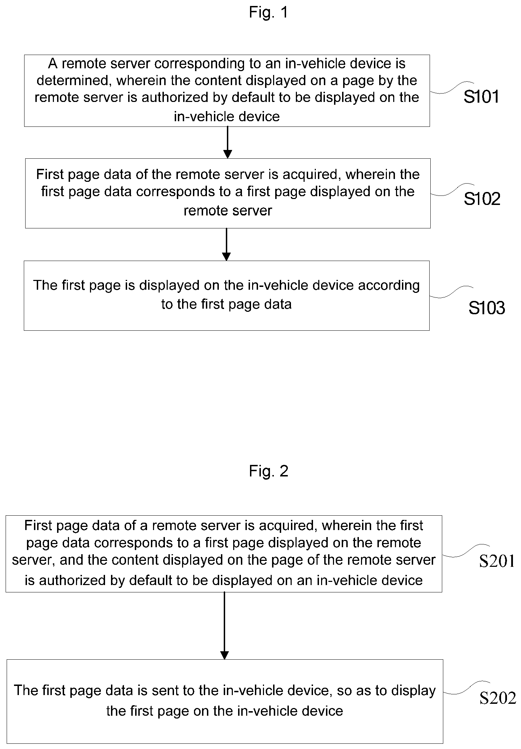

Fig. 1 is a flowchart of a page display method I according to an embodiment of the present disclosure, and as shown in Fig. 1, the method includes the following steps:
Step S101, a remote server corresponding to an in-vehicle device is determined, wherein the content displayed on a page by the remote server is authorized by default to be displayed on the in-vehicle device;
Step S102, first page data of the remote server is acquired, wherein the first page data corresponds to a first page displayed on the remote server; and
Step S103: the first page is displayed on the in-vehicle device according to the first page data.

By means of the described steps, for an in-vehicle device side, after the remote server corresponding to the in-vehicle device is determined, first page data of the remote server is acquired, and then a corresponding first page is displayed on the in-vehicle device. The application environment of the third-party application (i.e. the content displayed on the page) is displayed by displaying the page of the remote server. The content displayed on the remote server is authorized by default to be displayed on the in-vehicle device side, and the application on the remote server side is able to be customized and fully authorized. Compared with a scenario in which a mobile terminal is configured to project a screen to a vehicle, on the one hand, more application environment of a third-party application can be displayed, and on the other hand, the complexity of performing authorization on an application in a single use is avoided. In addition, by means of the described processing, the purpose of rapidly and conveniently receiving a first page projected by a remote server by means of a mobile device is achieved, thereby solving the technical problem in the related art of complicated screen projection steps due to the limitation of a screen projection permission when screen projection of an in-vehicle device is performed.

As an alternative embodiment, when the remote server corresponding to the in-vehicle device is determined, a plurality of manners may be used, for example, a connection request may be sent to a mobile device between the in-vehicle device and the remote server, wherein the connection request carries first identifier information of the in-vehicle device. The first identifier information is configured to identify a connection request sent to the mobile device by the in-vehicle device, so as to call an address of a corresponding remote server. A remote server corresponding to the in-vehicle device is determined according to the address of the remote server.

As an alternative embodiment, when the remote server corresponding to the in-vehicle device is determined, the determination may be implemented by the mobile device as relay communication. For example, the mobile device determines the address of the remote server according to the first identifier information and the second identifier information of the mobile device, loads the remote server according to the address of the remote server, and displays the first page of the remote server. The second identifier information of the mobile device is determined according to user account information, and is used for identifying a specific account so as to call an address of a remote server corresponding to the account. The address of the remote server is determined by means of the first identifier information and the second identifier information; according to the acquired address of the remote server, the first page of the remote server corresponding to the address of the remote server is acquired; different addresses of the remote server correspond to different first pages of the remote server; and applications included in the first page of the remote server are also different. When the remote server is loaded according to the address of the remote server, it may be first verified whether the address of the remote server is valid, and if invalid, invalid information is displayed to prompt a user, and if valid, a next operation is performed, i.e. the first page of the remote server is opened. It should be noted that the first page may be a sub-page in the terminal, and is approximately the same as a terminal page in display; the first page may have the same application program as that in the mobile device, so that after the first page is projected onto the in-vehicle device, the application program can be displayed and used. The mobile device may be various devices such as a mobile phone and a tablet. On different mobile devices, the first page may be acquired according to the address of the remote server, so that the present alternative embodiment is more widely used and more practical.

As an alternative embodiment, after the first page displayed on the remote server is displayed on the in-vehicle device according to the first page display data, an application program in the first page displayed on the in-vehicle device may further be operated, for example, an operation may be performed by means of the following steps: receiving an application opening instruction, wherein the application opening instruction is configured to open a predetermined application on the first page; sending the application opening instruction to the remote server; receiving second page data sent by the remote server, wherein the second page data corresponds to a second page, and the second page is a page obtained after the predetermined application is opened on the first page according to the application opening instruction; and displaying the second page on the in-vehicle device according to the second page data.

By means of an operation performed on a predetermined application on a page at an in-vehicle device side, according to response data corresponding to the operation, a second page corresponding to the response data is displayed at the in-vehicle device side. By means of receiving an application opening instruction as described above, after opening a predetermined application on a first page according to the application opening instruction, the remote server displays the second page and acquires second page data corresponding to the second page, and after receiving the second page data, the second page is displayed on the in-vehicle infotainment side according to the second page data, which enables a third-party application displayed on the remote server to be displayed on the in-vehicle device side, displays the application environment of a third-party application simply and conveniently, and has good interactive experience.

It should be noted that the foregoing application opening instruction is only an example. There may also be various operations for an application. For example, there are various instructions for executing an operation on an application, such as a voice instruction and a touch instruction, and an operation executed may also be deleting an application, opening an application, etc. The various instructions may also be operated together, so that it is more convenient for a user to send an instruction, thereby greatly facilitating use by the user. Taking opening an application by a touch instruction as an example, a user touches a certain position coordinate of an in-vehicle device, a remote server converts the position coordinate to obtain a position coordinate corresponding to a remote server side. An operation is executed at the position coordinate, that is, by responding to the operation instruction, after the operation is executed, page data after the operation is executes can be obtained. The obtained page data is sent to the in-vehicle device, and then is displayed on the in-vehicle device, so that the user executes an operation on a predetermined application on the in-in-vehicle infotainment side, and a display result after the operation is executed is displayed, achieving the same effect as a local operation on the in-vehicle device. The second page is a display page on which a predetermined application is displayed. In addition to being capable of displaying the second page on an in-vehicle device, a user may also operate the second page for further application.

As an alternative embodiment, the display effect of the second page is determined according to a resolution of the in-vehicle device. When the second page data is sent to the in-vehicle device, the resolution of the in-vehicle device may be firstly acquired from the in-vehicle device, and the second page data is generated according to the resolution of the in-vehicle device; and then when the in-vehicle device receives the second page data, a second page adapted to the in-vehicle device may be directly displayed according to the received second page data. The second page displayed on the in-vehicle device side is determined according to the resolution of the in-vehicle device, so that the second page displayed on the in-vehicle device better meets the viewing experience of the user.

It should be noted that the second page data adapted to the resolution of the in-vehicle device may be obtained by the remote server by performing a corresponding operation, and may also be obtained by the mobile device. The remote server or the mobile device adjusts the display mode of the second page according to the resolution of the in-vehicle device, so as to obtain a page adapted to display of the in-vehicle device, wherein the display mode includes landscape display or portrait display. That is, the remote server or the mobile device may dynamically adjust the application display effect according to the resolution of the in-vehicle device, set landscape display or portrait display, etc. Thus, the display of the application is adapted to the display of the in-vehicle device, and the user can obtain a good visual and use experience.

As an alternative embodiment, after the displaying the second page on the in-vehicle device according to the second page data, the method further includes: receiving an operation instruction configured to perform an operation on the predetermined application, and a first coordinate, on the second page displayed on the in-vehicle device, of the operation; sending the operation instruction and the first coordinate to the remote server; receiving third page data sent by the remote server, wherein the third page data corresponds to a third page, the third page is a page obtained after the operation is executed on the predetermined application on a second coordinate of the second page according to the operation instruction, and the second coordinate is obtained by converting the first coordinate by using a predetermined coordinate conversion relationship between the in-vehicle device and the remote server; and displaying the second page on the in-vehicle device according to the second page data.

After the second page is displayed on the in-vehicle device, the user may need to perform an operation on an object (control component, or display screen) on the second page. When an operation on a predetermined application on a second page displayed on the in-vehicle device is received, since the coordinates of the operation on the in-vehicle device are different from the coordinates on the remote server, there is a certain correlation between the two, and therefore the coordinates of the in-vehicle device need to correspond to the coordinates of the remote server, and the first coordinate corresponding to the received operation instruction is determined. Then, the second coordinate, corresponding to the first coordinate, on the second page on the remote server is determined according to the described corresponding correlation. After receiving the operation instruction and the second coordinate of the operation instruction on the second page, the operation may be performed on the corresponding second coordinate on the second page of the remote server according to the operation instruction, to obtain a third page. Then, third page data corresponding to the third page is sent to the in-vehicle device, and the third page is further displayed on the in-vehicle device, i.e. a page displayed after an operation is executed according to the operation instruction. By means of the described processing, an operation on an application on a second page displayed on an in-vehicle device is realized.

As an alternative embodiment, after displaying the second page on the in-vehicle device according to the second page data, the method further includes: when the opened predetermined application includes multimedia content, receiving multimedia data sent by the remote server and corresponding to the multimedia content; and playing the multimedia data by means of a playing device on the in-vehicle device.

By means of the described processing, when a second page displayed on an in-vehicle device side includes multimedia data (e.g. video and audio), the remote server also sends the multimedia data (video and audio) to an in-vehicle device, so as to play the multimedia data by means of a playing device on the in-vehicle device. In this way, a user is provided with not only visual perception but also auditory stereoscopic perception, thereby improving user experience.

As an alternative embodiment, after displaying the second page on the in-vehicle device according to the second page data, the method further includes: receiving a control instruction configured to control the predetermined application, wherein the control instruction includes at least one of the following: a voice instruction, a gesture instruction and an image instruction; sending the control instruction to the remote server; receiving fourth page data sent by the remote server, wherein the fourth page data corresponds to a fourth page, and the fourth page is a page obtained after the predetermined application is controlled on the second page according to the control instruction; and displaying the fourth page on the in-vehicle device according to the second page data.

By means of the described processing process, by receiving various control instructions at an in-vehicle device side, and a displayed page is controlled according to the various control instructions, thereby achieving intelligent and diverse control manners, and effectively improving the control experience of a user.

As an alternative embodiment, multiple manners may be used for communication between an in-vehicle device and a remote server, for example, the in-vehicle device communicates with the remote server by means of a mobile terminal, the mobile terminal uses a webpage component to load a page displayed on the remote server, and the mobile terminal acquires page data of the remote server by means of the manner in which the webpage component loads a page displayed on the remote server, and sends to the in-vehicle device the page data acquired from the remote server.

Fig. 2 is a flowchart of a page display method II according to an embodiment of the present disclosure, and as shown in Fig. 2, the method includes the following steps:
step S201, first page data of a remote server is acquired, wherein the first page data corresponds to a first page displayed on the remote server, and the content displayed on the page by the remote server is authorized by default to be displayed on an in-vehicle device; and
step S202, the first page data is sent to the in-vehicle device, so as to display the first page on the in-vehicle device.

By means of the described steps, for a mobile device side, after the first page data of the remote server is acquired, the first page data is sent to the in-vehicle device, so as to display the first page on the in-vehicle device. The mobile device relays the in-vehicle device and the remote server, so as to display the application environment (i.e. content displayed on a page) of the third-party application at the in-vehicle device side. The content displayed on the remote server is authorized by default to be displayed on the in-vehicle device side, and the application on the remote server side may be customized and fully authorized. Compared with a scenario in which a mobile terminal is used to project a screen to a vehicle device, on the one hand, more application environment of a third-party application can be displayed, and on the other hand, the complexity of performing authorization on an application in a single use is avoided. In addition, by means of the described processing, the purpose of rapidly and conveniently receiving a first page projected by a remote server by means of a mobile device is achieved, thereby solving the technical problem in the related art of complicated screen projection steps due to the limitation of a screen projection permission when screen projection of an in-vehicle device is performed.

As an alternative embodiment, corresponding to the mobile device side, after sending the first page data to the in-vehicle device so as to display the first page on the in-vehicle device, the method further includes: receiving an application opening instruction sent by the in-vehicle device, wherein the application opening instruction is configured to open a predetermined application on the first page; opening the predetermined application on the first page according to the application opening instruction, so as to obtain a second page; acquiring second page data corresponding to the second page; and sending the second page data to the in-vehicle device, so as to display the second page on the in-vehicle device.

Upon receipt of an operation instruction sent by an in-vehicle device, a mobile device, as a relay, sends second page data corresponding to the second page to the in-vehicle device after a predetermined application is opened according to the operation instruction, so as to display the second page on the in-vehicle device. The process of executing a predetermined application operation on an application in an in-vehicle device by using a mobile device as a relay is achieved, i.e. the effect of displaying a third-party application on an in-vehicle device is achieved.

As an alternative embodiment, acquiring second page data corresponding to the second page includes: acquiring a resolution of the in-vehicle device; determining a display effect of the second page according to the resolution of the in-vehicle device; and acquiring second page data corresponding to the display effect.

The second page displayed on the in-vehicle device side is determined according to the resolution of the in-vehicle device, so that the second page displayed on the in-vehicle device better meets the viewing experience of the user.

As an alternative embodiment, after sending the second page data to the in-vehicle device so as to display the second page on the in-vehicle device, the method further includes: receiving an operation instruction and a first coordinate which are sent by the in-vehicle device, wherein the operation instruction is configured to perform an operation on the predetermined application, and the first coordinate is a coordinate, on the second page displayed on the in-vehicle device, of the operation; converting the first coordinate by using a predetermined coordinate conversion relationship between the in-vehicle device and the remote server, so as to obtain a second coordinate, on a second page displayed on the remote server, of the operation; executing, on the second coordinate of the second page, the operation on the predetermined application according to the operation instruction, so as to obtain a third page; acquiring third page data corresponding to the third page; and sending the second page data to the in-vehicle device, so as to display the second page on the in-vehicle device.

The mobile device relays the first coordinate and the corresponding operation instruction on the in-vehicle device, and the third page data which is obtained after the operation is executed by using the corresponding operation instruction according to the first coordinates, such that the in-vehicle device can completely display the third page corresponding operation instruction, so as to achieve a smooth operation experience of the user.

As an alternative embodiment, after sending the second page data to the in-vehicle device so as to display the second page on the in-vehicle device, the method further includes: when the opened predetermined application includes multimedia content, sending to the in-vehicle device multimedia data corresponding to the multimedia content, so as to play the multimedia data by means of a playing device on the in-vehicle device.

In cases where content played in a predetermined application includes multimedia content, a mobile device serving as a relay also relays the multimedia content, thereby effectively achieving the richness of the relay content, so that when a user uses a remote server to perform a screen projection operation, the user not only has a visual experience, but also has abundant auditory experience.

As an alternative embodiment, after sending the second page data to the in-vehicle device so as to display the second page on the in-vehicle device, the method further includes: receiving a control instruction sent by the in-vehicle device for controlling the predetermined application, wherein the control instruction includes at least one of the following: a voice instruction, a gesture instruction and an image instruction; controlling, on a second page displayed on the remote server, the predetermined application according to the control instruction, so as to obtain a fourth page; acquiring fourth page data corresponding to the fourth page; and sending the second page data to the in-vehicle device, so as to display the fourth page on the in-vehicle device.

The diversity of control instructions can not only meet the requirements of various types of personnel, but also achieve the intelligent control of the diverse control instructions, so as to achieve the same experience undifferentiated from that of local control.

As an alternative embodiment, the in-vehicle device communicates with the remote server by means of a mobile terminal, the mobile terminal acquires page data of the remote server by means of the manner in which the webpage component loads a page displayed on the remote server, and sends to the in-vehicle device the page data acquired from the remote server.

An alternative implementation mode is provided according to the foregoing embodiments and alternative embodiments, and is specifically described below.

With the progress and development of the era, more and more users are not satisfied with several core functions, such as map, music, and voice, of an in-vehicle device (i.e. an in-vehicle side device, that is the described in-vehicle device), and wish to integrate more functions of three-party applications and use them for free. Therefore, there is an urgent need to develop solutions for screen projection of three-party applications, so that the application environment of mobile phone can be directly mapped to a in-vehicle device, thereby enriching the use scenarios of a user.

In order to solve the problem, the solution of screen projection for a third party application according to an Android/IOS system has been developed in the related art, but there are various restrictions and bottlenecks on the Android/IOS system for screen projection of three-party applications. The present embodiment is illustrated by examples.

On the aspects of Android and IOS, neither Android nor IOS can directly acquire an audio stream of a three-party application; neither Android nor IOS can directly inject a touch event of an in-vehicle device into a three-party application; neither Android nor IOS can dynamically modify a display resolution and a landscape/portrait screen state of the three-party application; neither Android nor IOS can acquire an audio stream of the three-party application; neither Android nor IOS can directly control the three-party application by means of voice, etc. Even if the user manually opens the relevant permissions of the mobile phone, a screen projection is performed constrainedly, and the experience will not be good.

On the aspect of Android, if an Android wants to project a mobile phone-like device system, a global screen recording permission needs to be opened to acquire a screen of a mobile phone; and if the Android wants to enable an in-vehicle device to reversely control the mobile phone by means of touch, an ADB event input permission of developer options needs to be opened.

On the aspect of IOS, the IOS cannot acquire a screen of a mobile phone by opening a global screen recording permission, and cannot enable an in-vehicle device to reversely control the mobile phone by means of touch by opening an ADB event input permission of developer options.

In conclusion, if a user needs to use a mobile phone-like device system on an in-vehicle device, the Android mobile phone need to open a plurality of permissions, such as global screen recording (the screen of a mobile phone), ADB event injection (reverse control of the in-vehicle device by means of touch), and floating window permission (switching between landscape screen and portrait screen of a three-party application), and needs to be opened once for each use, which is very troublesome. Furthermore, the IOS cannot use a mobile phone-like device system on an in-vehicle device because of the permission problem.

In view of this, an alternative implementation of the present disclosure provides a solution for implementing an interworking 5G cloud host according to an in-vehicle device, which enables a user to perform, on the in-vehicle device, screen projection of an interaction with a user mobile phone device, and can be used directly without any permission.

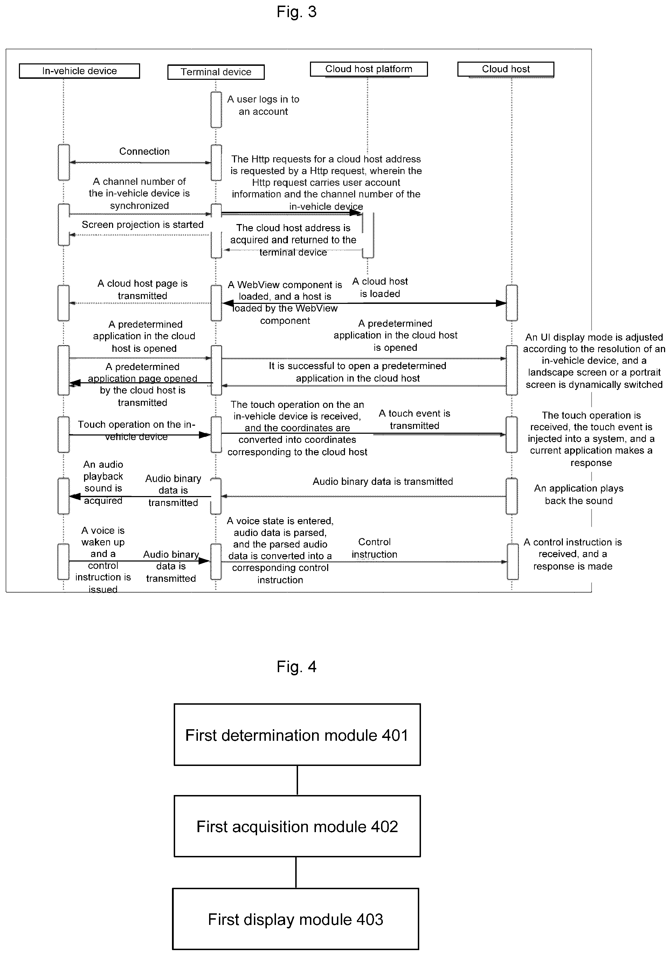

Fig. 3 is a schematic diagram of in-vehicle interaction provided according to an alternative embodiment of the disclosure. As shown in Fig. 3, a terminal device acquires a corresponding cloud host address from a cloud host system by using information of an in-vehicle device, then loads a cloud host page by using a WebView component, and finally maps a screen onto the in-vehicle device. The in-vehicle interaction method in an alternative implementation of the present disclosure is introduced as follows:
S1, a terminal device needs to first log in to a user account;
S2, the in-vehicle device is connected to the mobile phone, and after successful connection, the in-vehicle device pushes a channel number of the in-vehicle device to a terminal device; and the terminal device acquires a corresponding cloud host address from a cloud host platform according to the channel number of the in-vehicle device and user account information;
S3, an address of a cloud host is acquired, it is verified that the address of the host is valid, a WebView component is started to be loaded, then the cloud host is loaded by means of the WebView component, a terminal device opens a display page of the cloud host, and in this case, what is screen-projected on the in-vehicle device is a cloud host page displayed in the terminal device;
S4, the in-vehicle device may select an application, and the application in the cloud host is opened by means of the terminal device, and the cloud host dynamically adjusts the display effect of the application according to the resolution of the in-vehicle device, and sets the display effect to be a landscape screen or a portrait screen, etc.;
S5, a screen touch event of the in-vehicle device is transmitted to a terminal device, the in-vehicle device performs a proportional conversion according to the resolution of the in-vehicle device and the resolution of a cloud host, and finally obtains a touch coordinate on a mobile phone end corresponding to the coordinate on the cloud host; the terminal device transmits a response to the cloud host; and the cloud host dynamically injects the touch event and the coordinate into a cloud host system, and finally an application being opened makes a response;
S6, if the opened cloud host application is playing back a sound, the audio data will be transmitted to the terminal device in this case, and then the terminal device transmits the audio data to the in-vehicle device to produce sound;
S7, the in-vehicle device may also directly initiate a voice control, and the audio data waked up will be transmitted to the terminal device; the in-vehicle device first transmits the voice data subjected to binary processing to the mobile phone end; then the mobile phone end recognizes a corresponding control instruction and transmits the instruction to the cloud host; and the cloud host consumes the instruction and controls a third-party application, for example, skipping to a certain page, selecting the first one, playing back, pausing, etc.

Through the foregoing alternative implementation, at least the following benefits may be achieved:
(1) a three-party application in a cloud host system can be adaptively displayed: the cloud host can dynamically adjust the landscape/portrait screen state of the application according to the resolution of an in-vehicle device;
(2) the third-party application in the cloud host system can be reversely controlled directly from the in-vehicle device screen of the in-vehicle device;
(3) the audio of an application in a cloud host system can be played back directly;
(4) a voice directly can be waken up by means of an in-vehicle device, wherein the voice controls an application in the application environment of a cloud host;
(5) there is no need for the user to open any permission: the cloud host system is a customized system, and all the permissions are opened by default;
(6) terminal devices of multiple models are perfectly compatible;
(7) the user experience is greatly improved: the user can use the cloud host system as the mobile phone-like device system without too many complicated steps, and the overall interaction experience is greatly improved.

It should be noted that, the acquisition, storage and application, etc. of personal information of users involved in the technical solutions of the present disclosure all comply with the requirements of relevant laws and regulations, and do not violate public order and good custom. Furthermore, for brevity of description, the foregoing method embodiments are described as a series of actions. However, persons skilled in the art should understand that the present disclosure is not limited by the order of actions, because according to the present disclosure, some steps may be performed in another order or simultaneously. Secondly, a person skilled in the art should also know that the embodiments described in the description are all preferred embodiments, and the involved actions and modules are not necessarily required in the present disclosure.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

According to an embodiment of the present disclosure, also provided is an apparatus for implementing the page display method I. Fig. 4 is a structure diagram of a page display apparatus I according to an embodiment of the present disclosure. As shown in Fig. 4, the apparatus includes: a first determination module 401, a first acquisition module 402 and a first display module 403. The apparatus is described in details below:
a first determination module 401, configured to determine a remote server corresponding to an in-vehicle device, wherein the content displayed on a page by the remote server is authorized by default to be displayed on the in-vehicle device; a first acquisition module 402, connected to the first determination module 401 and configured to acquire first page data of the remote server, wherein the first page data corresponds to a first page displayed on the remote server; a first display module 403, connected to the first acquisition module 402 and configured to display the first page on the in-vehicle device according to the first page data.

As an alternative embodiment, the apparatus further includes: a first receiving module, configured to receive the application opening instruction after the first page displayed on the remote server is displayed on the in-vehicle device according to the first page display data, wherein the application opening instruction is configured to open a predetermined application on the first page; a second sending module, connected to the first receiving module, and configured to send the application opening instruction to a remote server; a second receiving module connected to the second sending module and configured to receive second page data sent by the remote server, wherein the second page data corresponds to a second page, and the second page is a page obtained after the predetermined application is opened on the first page according to the application opening instruction; and a second display module, connected to the second receiving module, and configured to display the second page on the in-vehicle device according to the second page data.

As an alternative embodiment, the display effect of the second page is determined according to the resolution of the in-vehicle device.

As an alternative embodiment, the apparatus further includes: a third receiving module, connected to the second display module, and configured to receive, after the second page is displayed on the in-vehicle device according to the second page data, an operation instruction configured to perform an operation on the predetermined application and a first coordinate for operating the second page displayed on the in-vehicle device; a third display module, connected to the third receiving module, and configured to send the operation instruction and the first coordinate to the remote server; a fourth receiving module, connected to the third sending module and configured to receive third page data sent by the remote server, wherein the third page data corresponds to a third page, the third page is a page obtained after the operation is executed on the predetermined application on a second coordinate of the second page according to the operation instruction, and the second coordinate is obtained by converting the first coordinate by using a predetermined coordinate conversion relationship between the in-vehicle device and the remote server; and a third display module, connected to the fourth receiving module, and configured to display the third page on the in-vehicle device according to the third page data.

As an alternative embodiment, the apparatus further includes: a fifth receiving module, connected to the second display module, and configured to receive, after displaying the second page on the in-vehicle device according to the second page data and when the opened predetermined application includes multimedia content, multimedia data sent by the remote server and corresponding to the multimedia content; and a playback module, connected to the fifth receiving module, and configured to play the multimedia data by means of a playing device on the in-vehicle device.

As an alternative embodiment, the apparatus further includes: a sixth receiving module connected to the second display module, and configured to receive, after displaying the second page on the in-vehicle device according to the second page data, a control instruction for controlling the predetermined application, wherein the control instruction includes at least one of the following: a voice instruction, a gesture instruction and an image instruction; a fourth sending module, connected to the sixth receiving module, and configured to send the control instruction to a remote server; a seventh receiving module, connected to the fourth sending module and configured to receive fourth page data sent by the remote server, wherein the fourth page data corresponds to a fourth page, and the fourth page is a page obtained after the predetermined application is controlled on the second page according to the control instruction; and a fourth display module, connected to the seventh receiving module and configured to display the fourth page on the in-vehicle device according to the fourth page data.

As an alternative embodiment, the in-vehicle device communicates with the remote server by means of a mobile terminal, wherein the mobile terminal uses a webpage component to load a page displayed on the remote server, and the mobile terminal acquires page data of the remote server by means of the manner in which the webpage component loads a page displayed on the remote server, and sends to the in-vehicle device the page data acquired from the remote server.

It should be noted herein that the first determination module 401, the first acquisition module 402, and the first display module403 correspond to step S101 to step S103 for implementing the page display method, and examples and application scenarios implemented by a plurality of modules are the same as those implemented by corresponding steps, but are not limited to the content disclosed in the foregoing embodiment.

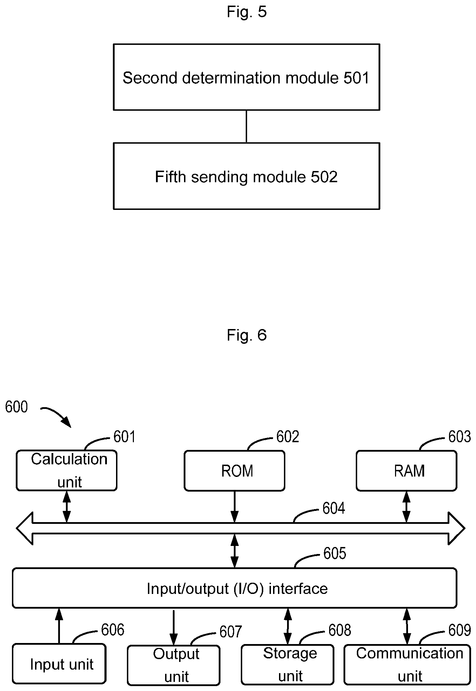

According to an embodiment of the present disclosure, further provided is an apparatus for implementing the page display method II. Fig. 5 is a structure diagram of a page display apparatus II according to an embodiment of the present disclosure. As shown in Fig. 5, the apparatus includes: a second acquisition module 501 and a fifth sending module 502. The apparatus is described in details below:
a second acquisition module 501, configured to acquire first page data of a remote server, wherein the first page data corresponds to a first page displayed on the remote server, and the content displayed on the page of the remote server is authorized by default to be displayed on a in-vehicle device; and a fifth sending module 502, connected to the second acquisition module 501 and configured to send the first page data to the in-vehicle device, so as to display the first page on the in-vehicle device.

As an alternative embodiment, the apparatus further includes: an eighth receiving module, configured to receive, after sending the first page data to the in-vehicle device so as to display the first page on the in-vehicle device, an application opening instruction sent by the in-vehicle device, wherein the application opening instruction is configured to open a predetermined application on the first page; an opening module, connected to the eighth receiving module and configured to open the predetermined application on the first page according to the application opening instruction, so as to obtain a second page; a third acquisition module, connected to the opening module and configured to acquire second page data corresponding to the second page; and a sixth sending module, connected to the third acquisition module and configured to send the second page data to the in-vehicle device, so as to display the second page on the in-vehicle device.

As an alternative embodiment, the third acquisition module includes: a first acquisition unit, configured to acquire a resolution of an in-vehicle device; a first determination unit, connected to the first acquisition unit and configured to determine a display effect of a second page according to the resolution of an in-vehicle device; and a second acquisition unit, connected to the first determination unit and configured to acquire second page data corresponding to the display effect.

As an alternative embodiment, the apparatus further includes: a ninth receiving module, connected to the sixth sending module, and configured to receive, after sending the second page data to the in-vehicle device so as to display the second page on the in-vehicle device, an operation instruction and a first coordinate which are sent by the in-vehicle device, wherein the operation instruction is configured to perform an operation on the predetermined application, and the first coordinate is a coordinate, on the second page displayed on the in-vehicle device, of the operation; a conversion module, connected to the ninth receiving module and configured to convert the first coordinate by using a predetermined coordinate conversion relationship between the in-vehicle device and the remote server, so as to obtain a second coordinate, on a second page displayed on the remote server, of the operation; an execution module, connected to the conversion module and configured to execute, on the second coordinate of the second page, the operation on the predetermined application according to the operation instruction, so as to obtain a third page; a fourth acquisition module, connected to the execution module and configured to acquire third page data corresponding to the third page; and a seventh sending module, connected to the fourth acquisition module, and configured to send the third page data to the in-vehicle device so as to display the third page on the in-vehicle device.

As an alternative embodiment, the apparatus further includes: an eighth sending module, configured to send, after sending the second page data to the in-vehicle device so as to display the second page on the in-vehicle device and when the opened predetermined application includes multimedia content, multimedia data corresponding to the multimedia content to the in-vehicle device, so as to play the multimedia data by means of a playing device on the in-vehicle device.

As an alternative embodiment, the apparatus further includes: a tenth receiving module, configured to receive, after sending the second page data to the in-vehicle device so as to display the second page on the in-vehicle device, a control instruction sent by the in-vehicle device for controlling the predetermined application, wherein the control instruction includes at least one of the following: a voice instruction, a gesture instruction and an image instruction; a control module, connected to the tenth receiving module and configured to control, on a second page displayed on the remote server, the predetermined application according to the control instruction, so as to obtain a fourth page; a fifth acquisition module, connected to the control module and configured to acquire fourth page data corresponding to a fourth page; and a ninth sending module, connected to the fifth acquisition module and configured to send the fourth page data to the in-vehicle device, so as to display the fourth page on the in-vehicle device.

As an alternative embodiment, the in-vehicle device communicates with the remote server by means of a mobile terminal, the mobile terminal acquires page data of the remote server by means of the manner in which the webpage component loads a page displayed on the remote server, and sends to the in-vehicle device the page data acquired from the remote server.

It should be noted herein that the foregoing second acquisition module 501 and the fifth sending module 502 correspond to step S201 to step S202 for implementing the page display method, and examples and application scenarios implemented by two modules are the same as those implemented by corresponding steps, but are not limited to the content disclosed in the foregoing embodiment.

According the embodiments of the present disclosure, the present disclosure also provides an electronic device, a readable storage medium and a computer program product.

Fig. 6 illustrates a schematic block diagram of an exemplary electronic device 600 which is able to be used to implement the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile apparatuses, such as personal digital processors, cellular telephones, smart phones, wearable devices, and other similar computing apparatuses. The components, connections and relationships therebetween, and functions thereof illustrated herein are by way of examples only, and are not intended to limit the implementation of the present disclosure as described and/or claimed herein.

As shown in Fig. 6, the electronic device 600 (or referred to as device 600) includes a calculation unit 601 which may perform various suitable actions and processes according to a computer program stored in a read only memory (ROM) 602 or a computer program loaded into a random access memory (RAM) 603 from a storage unit 608. In the RAM 603, various programs and data necessary for the operation of the storage device 600 can also be stored. The calculation unit 601, the ROM 802 and the RAM 603 are connected to one another by means of a bus 604. An input/output (I/O) interface 605 is also connected to the bus 604.

A plurality of components in the device 600 are connected to the I/O interface 605, including: an input unit 606, such as a keyboard, mouse, etc.; an output unit 607 such as various types of displays, speakers, etc.; a storage unit 608 such as a magnetic disk, an optical disk, etc.; and a communication unit 609 such as a network card, a modem, a wireless communication transceiver. The communication unit 609 allows the device 600 to exchange information/data with other devices via a computer network such as the Internet and/or various telecommunication networks.

The calculation unit 601 may be a variety of general-purpose and/or special-purpose processing assemblies having processing and calculation capabilities. Some examples of the calculation unit 601 include, but are not limited to, a central processing unit (CPU), a graphics processing unit (GPU), a variety of special-purpose artificial intelligence (Al) computing chips, a variety of calculation units running machine learning model algorithms, a digital signal processor (DSP), and any suitable processor, controller, microcontroller, etc. The calculation unit 601 executes the methods and processes as described above, for example, in the page display method. For example, in some embodiments, the page display method may be implemented as a computer software program, which is tangibly included in a machine-readable medium, for example, the storage unit 608. In some embodiments, a part or all of the computer program may be loaded into and/or installed into the device 600 via the ROM 602 and/or the communication unit 609. When the computer program is loaded into RAM 603 and executed by the calculation unit 601, one or more steps of the page display method may be executed. As at least one alternative embodiment, in other embodiments, the calculation unit 601 may be configured to perform, in any other suitable manner (for example, by means of firmware), the page display method.

As an alternative embodiment, provided is a non-transitory computer readable storage medium storing computer instructions, wherein the computer instructions are used to cause a computer to execute at least one of the above mentioned methods.

As an alternative embodiment, provided is a computer program product including a computer program which, when executed by a processor, implements at least one of the above mentioned methods.

As an alternative embodiment, provided is an automatic driving system, including: a controller, a memory, a sensor, a display screen and a data transmission interface, wherein the controller is in communication with the memory, the sensor, the display screen and the data transmission interface, and controls the automatic driving system to execute the page display method.

As an alternative embodiment, provided is a smart cockpit, including a controller, a memory, a sensor, a display screen and a data transmission interface, wherein the controller is in communication with the memory, the sensor, the display screen and the data transmission interface, and is used for controlling the smart cockpit to execute the page display method.

As an alternative embodiment, provided is an Internet of Vehicles system, including: a vehicle, a mobile terminal and a remote server, wherein the vehicle includes a in-vehicle device, the in-vehicle device communicates with the remote server by means of the mobile terminal, the in-vehicle device is used for executing the page display method corresponding to the in-vehicle device, and the remote server is used for executing the page display method corresponding to the remote server.

Various embodiments of the systems and techniques described above herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software, and/or combinations thereof. These various embodiments may include: implementations in one or more computer programs, wherein the one or more computer programs can be executed and/or interpreted on a programmable system including at least one programmable processor, the programmable processor may be a special-purpose or general-purpose programmable processor, may receive data and instructions from a storage system, at least one input apparatus and at least one output apparatus, and may transmit the data and instructions to the storage system, the at least one input apparatus and the at least one output apparatus.

Program codes for implementing the methods of the present disclosure may be written in any combination of one or more programming languages. These program codes may be provided to a processor or controller of a general-purpose computer, a special-purpose computer or other programmable data processing apparatuses, such that the program codes, when executed by the processor or controller, cause the functions/operations specified in the flowcharts and/or block diagram to be executed. The program codes may be entirely executed on a machine and partly executed on a machine, and as a standalone software package, partly executed on a machine and partly executed on a remote machine, or entirely executed on a remote machine or server.

In the context of the present disclosure, a machine-readable medium may be tangible media that may contain or store programs for use by an instruction execution system, apparatus or device, or for use in connection with the instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combinations of the described content. More specific examples of machine-readable storage media include electrical connection according to one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combinations of the described content.

To provide interaction with a user, the systems and techniques described herein may be implemented on a computer having: a display apparatus (e.g. CRT (cathode ray tube) or LCD (liquid crystal display) monitor) for displaying information to the user; and a keyboard and a pointing apparatus (e.g. mouse or trackball) by which the user can provide an input to the computer. Other kinds of apparatuses may also be used to provide interaction with the user; for example, feedback provided to the user can be any form of sensing feedback (e.g. visual feedback, auditory feedback or tactile feedback); and input from the user may be received in any form (including acoustic input, speech input or tactile input).

The systems and techniques described herein may be implemented in a computing system including a backend component (e.g. as a data server), or a computing system including a midware component (e.g. an application server), or a computing system including a front-end component (e.g. a user computer having a graphical user interface or a web browser through which the user may interact with embodiments of the systems and techniques described herein), or computing systems including any combination of such a backend component, midware component, or front-end component. The components of the system may be interconnected by any form or medium of digital data communication (e.g. a communication network). Examples of the communication network include: a local area network (LAN), a wide area network (WAN), and an Internet.

The computer system may include a client and a server. The client and the server are generally away from each other and typically interact via a communication network. A client-server relationship is generated by computer programs running on respective computers and having a client-server relationship to each other. The server may be a cloud server, may also be a server of a distributed system, or a server combined with a Blockchain.

It should be understood that the steps may be reordered, added, or deleted by using the various forms of flows as shown above. For example, the steps disclosed in the present disclosure may be executed in parallel, may also be executed sequentially, and may also be executed in a different order, as long as desired results of the technical solutions disclosed in the present disclosure can be achieved, which are not limited herein.

The specific embodiments do not limit the scope of protection of the present disclosure. It will be apparent to a person skilled in the art that various modifications, combinations, sub-combinations, and replacements can be made according to design requirements and other factors. Any modifications, equivalent replacements, improvements, etc. made within the spirit and principle of the present disclosure shall belong to the scope of protection of the present disclosure

## Claims

1. A page display method, comprising:
determining a remote server corresponding to an in-vehicle device, wherein content displayed on a page of the remote server is authorized by default to be displayed on the in-vehicle device;
acquiring first page data of the remote server, wherein the first page data corresponds to a first page displayed on the remote server; and
displaying the first page on the in-vehicle device according to the first page data.

2. The method as claimed in claim 1, after displaying the first page on the in-vehicle device according to the first page data, further comprising:
receiving an application opening instruction, wherein the application opening instruction is configured to open a predetermined application on the first page;
sending the application opening instruction to the remote server;
receiving second page data sent by the remote server, wherein the second page data corresponds to a second page, and the second page is a page obtained after the predetermined application is opened on the first page according to the application opening instruction; and
displaying the second page on the in-vehicle device according to the second page data.

3. The method as claimed in claim 2, wherein a display effect of the second page is determined according to a resolution of the in-vehicle device.

4. The method as claimed in claim 2, after displaying the second page on the in-vehicle device according to the second page data, further comprising:
receiving an operation instruction for performing an operation on the predetermined application, and a first coordinate, on the second page displayed on the in-vehicle device, of the operation;
sending the operation instruction and the first coordinate to the remote server;
receiving third page data sent by the remote server, wherein the third page data corresponds to a third page, the third page is a page obtained after the operation is executed on the predetermined application on a second coordinate of the second page according to the operation instruction, and the second coordinate is obtained by converting the first coordinate by using a predetermined coordinate conversion relationship between the in-vehicle device and the remote server; and
displaying the third page on the in-vehicle device according to the third page data.

5. The method as claimed in claim 2, after displaying the second page on the in-vehicle device according to the second page data, further comprising:
when the opened predetermined application comprises multimedia content, receiving multimedia data sent by the remote server and corresponding to the multimedia content; and
playing the multimedia data by a playing device on the in-vehicle device.

6. The method as claimed in claim 2, after displaying the second page on the in-vehicle device according to the second page data, further comprising:
receiving a control instruction for controlling the predetermined application, wherein the control instruction comprises at least one of following: a voice instruction, a gesture instruction and an image instruction;
sending the control instruction to the remote server;
receiving fourth page data sent by the remote server, wherein the fourth page data corresponds to a fourth page, and the fourth page is a page obtained after the predetermined application is controlled on the second page according to the control instruction; and
displaying the fourth page on the in-vehicle device according to the fourth page data.

7. The method as claimed in any one of claims 1 to 6, wherein the in-vehicle device communicates with the remote server by means of a mobile terminal, the mobile terminal uses a webpage component to load a page displayed on the remote server, and the mobile terminal acquires page data of the remote server by means of a manner in which the webpage component loads a page displayed on the remote server, and sends to the in-vehicle device the page data acquired from the remote server.

8. A page display method, comprising:
acquiring first page data of a remote server, wherein the first page data corresponds to a first page displayed on the remote server, and content displayed on the page of the remote server is authorized by default to be displayed on an in-vehicle device; and
sending the first page data to the in-vehicle device, so as to display the first page on the in-vehicle device.

9. The method as claimed in claim 8, after sending the first page data to the in-vehicle device so as to display the first page on the in-vehicle device, further comprising:
receiving an application opening instruction sent by the in-vehicle device, wherein the application opening instruction is configured to open a predetermined application on the first page;
opening the predetermined application on the first page according to the application opening instruction, so as to obtain a second page;
acquiring second page data corresponding to the second page; and
sending the second page data to the in-vehicle device, so as to display the second page on the in-vehicle device.

10. The method as claimed in claim 9, wherein acquiring second page data corresponding to the second page comprises:
acquiring a resolution of the in-vehicle device;
determining a display effect of the second page according to the resolution of the in-vehicle device; and
acquiring second page data corresponding to the display effect.

11. The method as claimed in claim 9, after sending the second page data to the in-vehicle device so as to display the second page on the in-vehicle device, further comprising:
receiving an operation instruction and a first coordinate which are sent by the in-vehicle device, wherein the operation instruction is configured to perform an operation on the predetermined application, and the first coordinate is a coordinate, on the second page displayed on the in-vehicle device, of the operation;
converting the first coordinate by using a predetermined coordinate conversion relationship between the in-vehicle device and the remote server, so as to obtain a second coordinate, on a second page displayed on the remote server, of the operation;
executing, on the second coordinate of the second page, the operation on the predetermined application according to the operation instruction, so as to obtain a third page;
acquiring third page data corresponding to the third page; and
sending the third page data to the in-vehicle device, so as to display the third page on the in-vehicle device.

12. The method as claimed in claim 9, after sending the second page data to the in-vehicle device so as to display the second page on the in-vehicle device, further comprising:
when the opened predetermined application comprises multimedia content, sending to the in-vehicle device multimedia data corresponding to the multimedia content, so as to play the multimedia data by a playing device on the in-vehicle device.

13. The method as claimed in claim 9, after sending the second page data to the in-vehicle device so as to display the second page on the in-vehicle device, further comprising:
receiving a control instruction sent by the in-vehicle device for controlling the predetermined application, wherein the control instruction comprises at least one of following: a voice instruction, a gesture instruction and an image instruction;
controlling, on a second page displayed on the remote server, the predetermined application according to the control instruction, so as to obtain a fourth page;
acquiring fourth page data corresponding to the fourth page; and
sending the fourth page data to the in-vehicle device, so as to display the fourth page on the in-vehicle device.

14. The method as claimed in any one of claims 8 to 13, wherein the in-vehicle device communicates with the remote server by means of a mobile terminal, the mobile terminal acquires page data of the remote server by means of a manner in which a webpage component loads a page displayed on the remote server, and sends to the in-vehicle device the page data acquired from the remote server.

15. An electronic device comprising:
at least one processor; and
a memory communicatively connected to the at least one processor, wherein
the memory stores an instruction executable by the at least one processor, and the instruction is executed by the at least one processor, so that the at least one processor can execute the method according to any one of claims 1 to 14.
